# EUROPEAN PATENT SPECIFICATION

(11) **EP 1 778 464 B1**
(45) Date of publication and mention of the grant of the patent: **18.03.2009**
(21) Application number: 05759076.2
(22) Date of filing: 06.07.2005
(51) Int. Cl.: B29D 31/00, B29C 70/74, B29C 65/48

(54) **METHODS FOR MAKING RUBBER/FABRIC COMPOSITE PRODUCTS**
VERFAHREN ZUR HERSTELLUNG VON EINER KAUTSCHUK-/GEWEBE-VERBUNDPRODUKTE
PROCEDES POUR LA FABRICATION DE PRODUITS COMPOSITES A BASE DE CAOUTCHOUC/TISSU

(30) Priority: 06.07.2004 GB 0415185
(43) Date of publication of application: 02.05.2007
(73) Proprietor: HAYDALE LIMITED, Briton Ferry SA11 2YW (GB)
(72) Inventor: WALTERS, Ian, Swansea, West Glamorgan SA4 9RU (GB); HOUGH, Philip, Swansea West Glamorgan SA4 9RU (GB)
(74) Representative: Stoner, Gerard Patrick
(86) International application number: PCT/GB2005/002676
(87) International publication number: WO 2006/003462

(56) References cited:
- US-A- 2 296 502
- US-B1- 6 681 416
- PATENT ABSTRACTS OF JAPAN vol. 012, no. 045 (M-667), 10 February 1988 (1988-02-10) & JP 62 198442 A (EIDAI KAKO KK), 2 September 1987 (1987-09-02)

## Description

This application has to do with new ways of making composite products, and particularly laminar products such as mats and carpets, having a fibre-based layer such as a woven or non-woven fabric superimposed on a thermoset layer, particularly a rubber layer. We also describe new processing apparatus and new composite products.

### BACKGROUND

In general terms, a moulded rubber mat can be made by putting a piece of uncured thermosettable rubber composition between upper and lower plates of a mould and applying heat and pressure in a moulding press, causing the rubber composition to flow into conformity with the mould pattern and to cure. The upper and/or lower mould plate may be given surface conformation features such as shaped recesses which create corresponding ribs or other protrusions in the moulded product. Manufacturing of floor mats is disclosed in US-A-2,295,099.

A fabric-covered composite product can be made by superimposing a fabric layer, e.g. a tufted fabric layer, on the layer of uncured rubber in the mould. The moulding bonds the rubber layer onto the back of the textile layer as the rubber cures.

We note various respects in which the existing techniques and products can be improved and developed.

One issue is that the moulding operation can affect the tufts or pile of a textile layer. Depending on the Tg of thermoplastic fibres in the tufts, they may lose their "shape memory" under the heat of moulding. This crushes or flattens the fibres and it is difficult to raise them again, even by subsequent brushing (which is conventional). If this difficulty could be reduced, the quality of existing products could be improved and they would be easier to make. It would also become practical to use fibres with lower Tg's which may have special uses. For example, a patterned mat or carpet tile may be made with white or neutral-coloured fibres and subsequently printed. Low MW thermoplastics are susceptible to printing, but they have low Tg. Also, if they are flattened the printing may be spoiled because it is difficult to print onto the ends of the fibres as is desired.

Another issue addressed here is to improve the manufacture and product characteristics of laminar products, such as mats or carpets, in which one or more fabric pieces e.g. of tufted textile are positioned locally e.g. in a pattern array on an otherwise exposed rubber surface.

Another issue addressed is that providing products of the kind described which have novel surface conformations with special functions, for example new visual effects such as colour on the rubber, or practical effects such as dirt removal from footwear when used as floor coverings.

A first aspect of our proposals, which is not part of the invention, is a method of making a composite in which a fabric layer and an uncured rubber layer are superimposed in a mould having opposed plates, and subjected to heat and pressure between the plates to cure the rubber and join it to the fabric layer. [Such a method is referred to below as a "method of the kind described".] A characteristic of this first method aspect, which is not part of the invention, is that, on the fabric side, a heat-shield element is positioned adjacent the fabric layer, and in particular between a metal mould plate surface and the adjacent fabric layer.

The heat-shield element may occupy only part of the mould plate surface, preferably a part corresponding in shape to a fabric layer piece which in turn only covers a part of the rubber layer. In a preferred version, plural fabric layer pieces are distributed over the rubber layer, and respective heat-shield element portions are provided for these. At other regions of that face, the metal mould plate surface may directly contact the rubber layer.

Preferably the heat-shield element is a discrete insert of thermally insulative material, e.g. a polymeric material such as PTFE. Conveniently, one or more heat-shield elements is/are removably positionable at one or more predetermined corresponding positions on the mould plate surface.

By presenting the insulative material of the shield element to the fabric layer, flow of heat to the fabric layer is inhibited. So, where the fabric layer is vulnerable to heat e.g. because it has thermoplastic fibres, and particularly if it has upstanding pile or tuft fibres, the heat-shield element protects the fabric element against heat while still enabling moulding pressure to be applied against that portion of the article's surface.

The shape of the heat-shield element will depend on the shape of the mould plate and on the desired shape of the fabric-covered region of the composite article. Preferably the metal mould plate surface has one or more recesses in which the corresponding one or more heat-shield elements are received, e.g. removably as mentioned. By seating in a recess, the inward face of the heat-shield element can be aligned, e.g. aligned flush, with the adjacent metal mould plate surface.

In use, the shield element blocks heat flow to the article surface but its temperature nevertheless gradually approximates to that of the surrounding mould plate, especially if the moulding operation is a long one. For a thick mat, this might be about 15 minutes. So, in a preferred procedure the heat-shield element is periodically removed - perhaps after each moulding operation - and replaced with a cool one.

In a second proposal, which is not part of the invention, the mould plate is provided with projecting retaining formations, to engage a fabric piece and hold it initially in a predetermined place on the adjacent mould plate. This can avoid accidental displacement of a fabric piece as the uncured rubber piece is positioned, or as the mould plates move together. It is particularly useful where one or more smaller fabric pieces are arranged at predetermined subareas of a larger rubber layer. Preferred retaining formations are pointed elements or spikes which engage the fabric piece within its area rather than peripherally. They need not then leave any visible trace on the moulded product. Pointed elements or spikes may merely engage the fabric surface, or they may penetrate through the fabric either at the time of positioning, or subsequently when the mould plates are moved together. With rough or tufted fabric, adequate location is available by either means.

In one preferred version, location formations are provided in conjunction with a heat-shield element as described above. The formations may be provided on the heat-shield element. More preferably, for reasons discussed below, they are heat-conductive (e.g. metal) spikes or pins which project through the insulative heat-shield element from behind. A suitable array of retaining projections may be provided as a module, preferably mounted in a recessed area of the mould which can also receive a heat-shield element. Metal pins or spikes may be integrated with the heat-shield element, or more preferably, project through holes in the element so that the latter can be separated.

A third independent proposal, which is not part of the invention, is combinable with either the first or second above, and is conceptually distinct from the second proposal although they may be provided by similar technical means. When a fabric layer is applied to a rubber article (e.g. layer) and the composite is moulded, the rubber on the fabric side is to some extent masked from the mould heat. Depending on the moulding conditions, the rubber type, the thickness of the rubber and the thickness of the fabric, this may lead to insufficient curing of the rubber immediately beneath the fabric. This is particularly significant if a heat-shield element is used against the fabric, as in the first aspect above. Especially with a thick rubber substrate, insufficient heat may permeate to the rubber on the fabric side. Addressing this technical issue, our third proposal is that the mould plate on the fabric side comprises or carries an array of plural projecting heat conductive (usually metal) pins, which penetrate the fabric and engage the rubber beneath, preferably projecting into the rubber mass. This may be useful for example when a fabric layer is itself thick and insulative, irrespective of how much of the rubber surface it covers. More particularly the proposal is valuable where the mould plate carries a heat-shield element as in the first aspect, e.g. plural such elements arranged over the mould plate in a predetermined array. Advantageously, the or each heat-shield element may then have a corresponding array of the mentioned heat-transfer pins, thermally connected to the heated element behind the heat-shield element, and projecting in an array from the surface of the heat-shield element so that under pressure they penetrate a fabric piece superimposed on that heat-shield element. Conveniently the heat-shield element is separable from the heat-transfer pins, e.g. they extend through holes in the element and project from its inner surface.

It will of course be appreciated that such pins can also serve the location function required in the second aspect above, although that aspect does not specifically require either heat conduction nor full penetration of the fabric.

The depth of penetration and the individual thickness and array area density of pins in the array can readily be adjusted in order to achieve adequate curing of the rubber beneath the fabric, based on simple tests.

From the above, it will be understood that a particularly preferred embodiment of our proposals, which is not part of the invention, provides/uses a mould plate having a main metal surface, for contacting rubber in the mould, optionally with three-dimensional conformation for profiling that rubber surface, interrupted by recesses at locations where fabric pieces e.g. of tufted textiles are to be positioned on the rubber product. An array of metal pins projects from the base of each recess. These may be fitted as a discrete module, with a metal base plate carrying the pins which can be rested in or fixed into the recess. Removable heat-shield elements are provided shaped to fit into the recesses, and having openings through which the heat-transfer pins extend so that they project above an inner surface of the heat-shield element. In use, fabric pieces whose shapes correspond to the recesses are positioned on them, resting on the points of the pins which keep them in place as a layer of uncured rubber is also put in the mould. A top mould plate put in place and the mould assembly put into a mould press where it is subjected to heat and pressure. The pins penetrate the fabric pieces, and heat conducted through them helps curing of the rubber immediately beneath. The heat-shield elements protect the fabric surface, and particularly a tuft or pile thereon, against the effects of heat. When the rubber is cured, the mould is opened, the product removed, the (by now hot) heat-shield elements taken out and replaced with fresh cool or cooler ones for the process to be repeated.

Another aspect of the invention (independent proposal), which is not part of the invention, also relates to reducing the effects of mould heat on potentially delicate fabric inserts, i.e. when making layers in which one or more fabric pieces cover only a part of a rubber layer surface. In this proposal, which is not part of the invention, the mould plate on the fabric side has one or more recesses to receive the corresponding fabric piece(s) with a discrete pressure plate in the recess on which the fabric lies. This pressure plate is movable in the recess towards and away from the moulding cavity, under the influence of one or more drive means or elements acting on it from behind. Desirably the mould plate on the fabric side has inner and outer elements, the inner having the recesses housing the pressure plates and the outer, movable relative to it, connected to the pressure plates through the drive means or elements so that when the mould is pressurised and the inner and outer elements are urged together, the pressure plates are advanced in their recesses and push the fabric pieces forward against the rubber layer during moulding. This gives a very positive location of the fabric pieces, since they can lie well down in their recesses safe from disturbance by the introduction into the mould of the other component layers. It also reduces heat transfer from the back moulding plate to the pressure plates and to the fabric pieces, since the structure connecting the back moulding plate to the pressure plates can be indirect, insulative or cross-sectionally small e.g. one or more legs, and conduct less heat per unit area of mould. If desired, the pressure plates may be made from or comprise a heat-shielding material.

In all of the aspects described herein, the fabric layer may be woven or non-woven. Preferably it is tufted. The tufts may consist of or contain thermoplastic filaments. The Tg of these filaments may be freely chosen, and may be below the moulding plate temperature where they can be protected by heat-shield elements. For example some polyamides have Tg lower than 50°C.

Tuft or pile on the fabric piece(s) is desirably brushed after the moulding stage.

The fabric may have an uncoloured tufting or pile which, after the moulding is coloured e.g. by printing.

A tufted fabric layer may or may not have the tufts anchored into the fabric (e.g. by adhesive, or by a thin backing or anchor layer of polymer or rubber, optionally uncured) before moulding together with the mentioned rubber substrate. Preferably a tufted fabric layer is moulded without an anchor coat; the bond to the rubber in the mould then also anchors the tufts.

The product may be a mat or carpet tile, for example. Typical products have fabric at one face and exposed rubber at the other, and comprise only the two mentioned layers. However there is no reason why a product should not have further layers or articles behind the rubber, joined on previously, simultaneously or subsequently, or indeed have fabric on both faces.

The invention is a different way of making a rubber layer product, e.g. a mat, having a rubber top surface interspersed with an array of fabric zones according to the method of claim 1. In the previous proposals, fabric pieces could be applied and bonded to a rubber layer in-mould. In the invention, a rubber mat base module is formed and cured with recesses at the intended positions of the fabric pieces. Preferably these recesses are right through the layer. They can be made by corresponding projecting blocks, e.g. discrete inserts, in the mould. The fabric pieces are joined onto separate rubber pieces and the resulting fabric-covered rubber pieces are fitted into the correspondingly-shaped recesses of the rubber base module and fixed e.g. by adhesive bonding. Desirably the outline of each fabric piece exactly matches the front surface of the rubber piece to which it is bonded, so that the fabric piece when bonded in place entirely occupies the opening of the recess. Preferably the recesses extend right through the rubber layer, and converge towards the front opening where the fabric piece is exposed. This provides for easy fitting, a very clean outline on the fabric piece, and security against the fabric-covered piece being forced out of the recess under strain. This method may be useful where in-mould bonding of smaller fabric pieces onto a larger rubber layer is found to lead to a poorly-defined outline or spoiled edge on the fabric piece. The fabric pieces may be joined to their rubber pieces in individual small moulds, e.g. by a method using proposals above, or else by adhesive bonding.

For good effect, this method is preferred for use with thicker mats, e.g. 10 mm, more preferably 15 mm or more thick at the recesses.

Creating characteristic surface conformations in methods where a fabric layer is bonded onto a rubber layer as the rubber layer is cured in a mould are now described.

Generally speaking, in this set of proposals a composite comprising a fabric layer and a rubber article (usually also a layer) is made by superimposing the fabric layer on the rubber in a mould, and subjecting them to heat and pressure. In this proposal, a mould surface that acts against the fabric layer has an array of recesses so that a mould region with an array of recesses is presented to a single fabric portion or region, and moulding pressure is applied causing rubber behind the fabric to deform into the recesses before curing thereby creating corresponding surface projections in the cured product.

According to the choice of materials and conditions, this can create a variety of results.

In one embodiment, which is not part of the invention, the rubber flows, permeates or bursts through the fabric layer at the recesses so that in the article a rubber projection appears on the surrounding fabric surface. This is favoured with fabrics of relatively open structure. The shape of the recess moulds the rubber projection. Preferably the projections are in a regular array. Preferred projections are in the form of localised studs or nipples. These are particularly useful where the fabric has a tufting or pile. The resulting product can have a surface of small rubber projections interspersed in a tufted textile finish, e.g. rising to approximately the same height. This makes a very useful matting or flooring surface. The rubber projections provide a mechanical scraping effect, the fibres can wick moisture.

The recesses may be formed in a heated e.g. metal surface of the mould, if the tuft or pile can stand it, or they may be provided in a heat-shield element or layer to protect the fabric e.g. tuft/pile in between the rubber protrusions. In one preferred embodiment, metal heat-transfer pins project through holes in a heat-shield element, as referred to previously. The heat-transfer pins assist cure on the fabric side of the rubber, as described above. If a heat-transfer pin projects through a hole in a mould element and into the rubber, it tends to prevent a rubber protrusion filling that hole. This is because the heat-transfer hastens the onset of cure and so reduces flow at that point; also the pin itself presents a barrier to flow into the recess. A protrusion forms only if the hole is substantially larger than the pin. So, good cure behind the fabric can be combined with forming an array of protrusions by selectively providing heat-transfer pins through only some holes/recesses of the mould (or heat-shield element).

In a further option, the mould surface between the recesses is a heating surface and softens, melts or fuses the fabric or a component of it creating a fused covering on the rubber at these portions. At the recesses, the fabric (or its tuft/pile) may either not fuse if sufficient clearance is provided for it in the recess, or it may also fuse - particularly if the rubber deforms into the recess behind it - so that a contoured surface with a fused coating is created. This may have a particular value in creating a coloured coating, since fusible fibrous webs are available in a variety of materials and colours, whereas rubber is notoriously difficult to colour.

In these fully-fused versions the fabric need only be sufficiently coherent to be evenly arranged over the rubber surface. It may be for example a loose felt or entanglement, e.g. of coloured polypropylene.

The material used for the rubber layer is not critical. However preferred embodiments use rubber materials made according to any one of the proposals in our WO 2005/028552. Alternatively stated, the rubber material used may be in accordance with any of the statements of invention, claims or embodiments as described in WO 2005/028552.
Fig. 1 is a schematic cross-section of a mould press for making a fabric-covered rubber mat;
Fig. 2 is a schematic cross-section showing a heat-shield element in a mould;
Fig. 3 is a cross-section showing a modified heat-shield element;
Fig. 4 is a cross-section showing a fabric-retaining and heat-transferring formation on the mould plate;
Fig. 5 is a cross-section showing a combination of heat-transfer pins and a heat-shield element, after moulding a composite;
Fig. 6 is a plan view of a layout of textile patch portions for a rectangular rubber mat with a contoured rubber surface;
Figs. 7(a) and (b) are a plan view and side view of a metal heat-transfer pin module;
Fig. 8 is a transverse cross-section of a lower mould plate for the mat layout of Fig. 6, including heat-transfer pin modules in situ;
Fig. 9(a) shows a rubber/textile composite being formed in a mould with a perforated mould plate, Fig. 9(b) shows a subsequent stage, and
Fig. 10 shows a product thereof;
Fig. 11 shows an initial stage for moulding a composite of a rubber layer and a tufted textile in a mould with a heat-shield element, Fig. 12 showing a subsequent processing stage;
Figs. 13 and 14 show first and second stages of moulding a rubber/polypropylene composite;
Fig. 15 shows a product thereof, and
Fig. 16 is a schematic cross-section showing a different mould press with adaptations for locating and protecting fabric pieces.

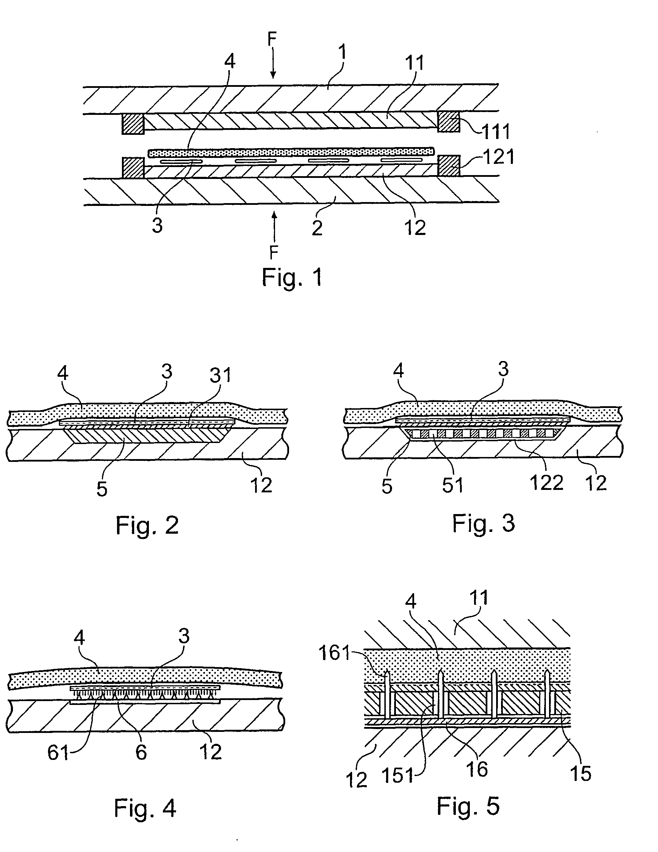

With reference to Fig. 1, a moulding press has an upper mould platen 1 and a lower platen 2 of a press, which can be pressed together (arrows F). Upper and lower mould plates 11,12 which can be pressed together in the mould - shown here separated - are steel plates with steel perimeter members 111,121. To make a rubber mat with an arrangement of textile facing portions, textile pieces 3 are laid on the lower mould plate 12 and a rectangular pre-cut sheet of uncured rubber 4 is laid on top. The heated press platens 1,2 are then forced together, forcing the rubber composition to flow, and form exactly to the mould plates and as it cures, bond to the rear surfaces of the textile pieces 3.

Fig. 2 shows a modification in which a PTFE heat-insulating plate 5, of shape and size corresponding to a textile piece 3 with a pile 31, seats in a recess of the lower mould plate 12. The pile 31 may be of tuft fibres having a Tg lower than the moulding temperature of the plate 12. On moulding, the insulative plate 5 restricts heat flow to the region of the textile piece, so that the shape memory of the tufts 31 is not lost and they can easily be brushed upright after moulding.

Fig. 3 shows a refinement in which the PTFE plate 5 has an array of holes 51 which provide additional clearance for the tuft fibres, further reducing crushing effect on these. At the same time, the insulative plate 5 presents enough distributed solid surface to the textile element to prevent it from deforming outwardly under moulding pressure, so that the product is not misshapen. As in Fig. 2, the inward face of the plate 5 is flush with the surrounding face of the mould plate 12.

A further feature in Fig. 3 is that the PTFE plate 5 is laid removably in the recess 122 of the metal mould plate. After a moulding operation, the PTFE plate is appreciably hot. It is taken out and replaced with a cool one for the next moulding operation.

Fig. 4 shows a different refinement in which, at the location of a fabric piece 3, a correspondingly-shaped array of metal retaining spikes is provided. In this embodiment, which is not part of the invention, they are mounted together on a common plate 6 to form a module which is seated in a corresponding slight recess of the lower mould plate 12. The retaining spikes 61 catch the tufted undersurface of the fabric piece 3, preventing it from being inadvertently shifted out of place as the rubber layer 4 is laid on top. Furthermore, during curing and under pressure, the spikes 6 are pushed through the textile piece and penetrate into the rubber layer 4 behind. They conduct heat into that part of the rubber so that it is not unduly insulated by the presence of the textile piece in between.

Fig. 5 shows a combination of these concepts, in which the lower metal mould surface 12 carries a spiked metal module with a backing plate 16 and an array of upstanding spikes 161. A foraminous PTFE plate 15 has an array of holes enabling it to be fitted over the metal spikes 161; it rests on the metal plate 16 with the spikes 161 projecting. For moulding, the textile layer 3 is laid on the spikes which help to hold it in position. On the application of moulding pressure, the spikes penetrate the textile layer 3 and enter the rubber layer 4 behind. This is the situation shown in Fig. 5. The insulative plate 15 protects most of the area of the fabric 3 against the heat of moulding. In particular, if it has a thermoplastic pile, this is protected against the effects of heat. At the same time, the conductive metal pins 161 conduct heat into the rubber surface behind the textile 3, ensuring that it is cured sufficiently.

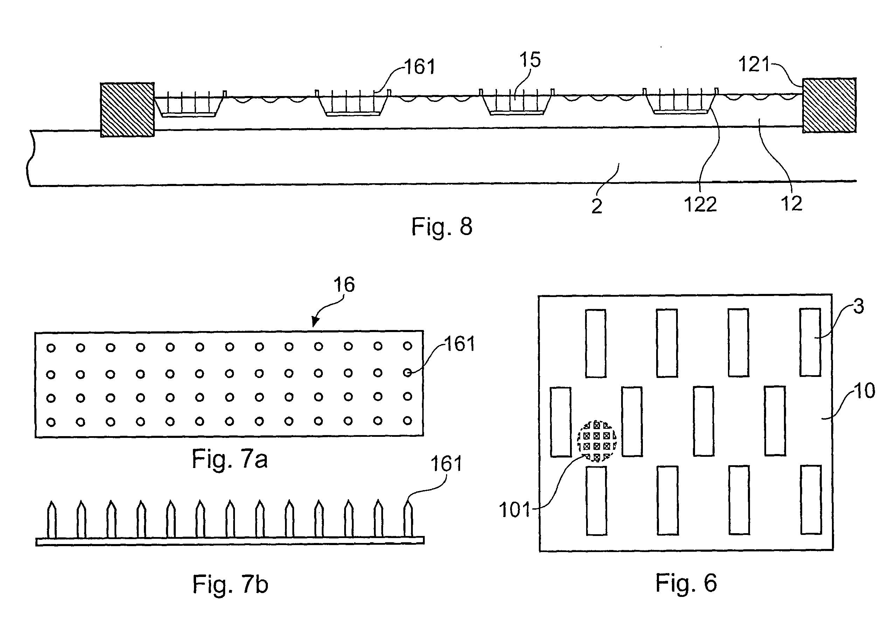

Figs. 6 to 8 show the Fig. 5 concept applied to a complete product. As shown in Fig. 6, the product is a mat 10 having a surface partly of exposed rubber, with a 3D surface pattern shown at 101, and an array of bonded-on tufted carpet pieces 3. A corresponding lower mould plate 12 is shown in Fig. 8. The main surface of the mould is a flat surface with an array of small recesses 124 corresponding to the intended rubber surface pattern 101 in the product. At areas corresponding to the carpet pieces 3 in the product, the lower mould plate has deeper recesses 122, in each of which sits a rectangular steel plate 16 carrying an array of spikes 161, shown in Fig. 7. The points of these spikes project up beyond the surrounding metal mould surface. In use, pre-cut rectangles of carpet 3 are prepared. Rectangular perforated PTFE plates 15 are laid in the recesses 122 on top of the spiked metal plates, with the spikes 161 projecting through, forming heat-insulated surfaces flushed with the surrounding metal surface. The carpet pieces 3, typically a tufted non-woven textile it may or may not have an anchor layer to hold the tufts in place, are laid tufts down on the spike arrays 161. These hold them in position while a thick layer of uncured rubber (not shown) is laid on top, the top mould plate put in place and the assembly put in the press. On the application of heat and pressure, the rubber-only portions of the mat 10 are pressed and cured at both surfaces in direct contact with the metal mould plates 11,12. At the regions of the carpet pieces 3, the behaviour is as described in relation to Fig. 5 above. So, the carpet tufts are protected against the moulding heat and the spikes 161 assist rubber cure behind the carpet piece.

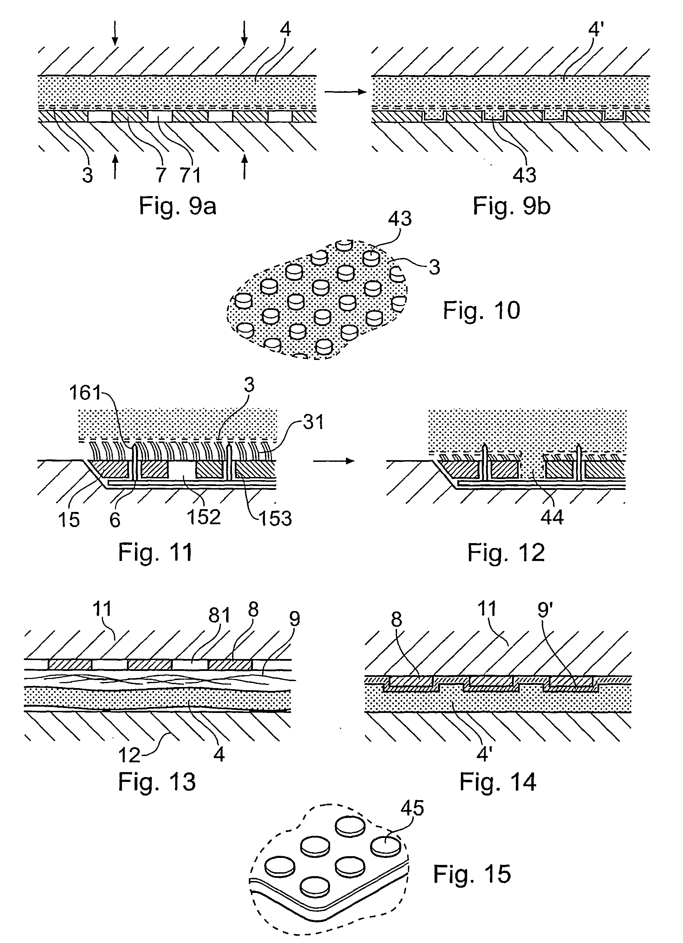

Fig. 9 shows stages of a different procedure in which the lower mould plate 12 carries a mould modifier plate 7 with an array of circular through-holes 71. A textile layer 3 is laid on this, and the rubber piece 4 on top as before. The textile may or may not cover the entire area of the mould. On the application of heat and pressure, rubber from the layer behind bursts or permeates through the textile material and into the holes 71 of the modifier plate, forming rubber projections 43. Fig. 10 shows part of the surface of the resulting product, with rubber "nibs" projecting up through a surface of textile material. Such a surface is particularly useful for a floor covering mat, since the rubber nibs 43 have a useful scraping effect whereas the textile area 3 may serve to wick away moisture.

Fig. 11 shows a related situation but with a heat-shielding plate 15 and a spiked metal heat-transfer module 6 as in Fig. 5. In this variant, some holes 152 in the insulative plate 15 do not have a heat-transfer pin i.e. are empty, and may optionally be made substantially larger than other holes 153 which have the spikes 161 projecting through them. On the application of moulding heat and pressure, as shown in Fig. 12, cure takes place early at the points of the spikes 161, blocking the holes 153. Rubber bursts through the textile 3 and into the vacant holes 152, (but not into the holes around the spikes 161) before cure takes place, selectively forming nibs or nipples 44 rather similar to those in Fig. 10.

Finally, Figs. 13 to 15 use a mould in which the upper mould plate 11 has attached to it a mould modifier plate 8 (a metal plate) with an array of circular holes 81. An uncured rubber layer 4 is laid in the lower mould, and a layer of a coloured random polypropylene entanglement, or other coloured thermoplastic open textile, is laid on top. When the mould is closed and heated, the thermoplastic textile is fused by the heat to form a continuous coloured surface layer 9'. At the same time the uncured rubber 4 is forced up into the modifier plate holes 81, taking the covering thermoplastics 9 with it, so that the cured rubber layer 4' takes on the shape of the modifier plate. The surface conformations (upstanding discs 45 shown in Fig. 15) are covered by the same fused thermoplastics layer as the rest of the area.

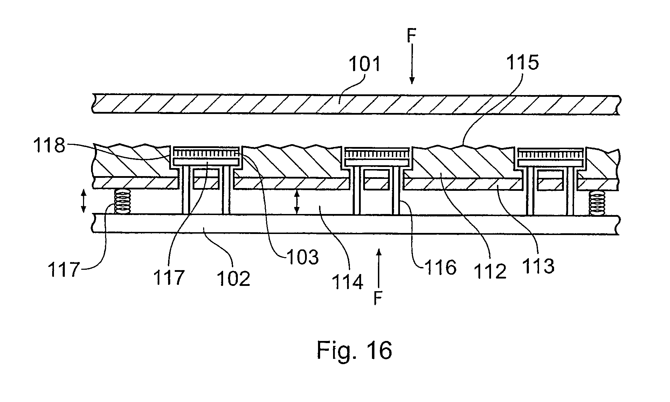

Fig. 16 shows a further option for a special mould construction to protect fabric pieces e.g. carpet 103 against the effects of heat. The lower mould plate has an inner metal plate 112, optionally with a three-dimensionally configured surface 115. The upper mould plate 101 may be plain, or three-dimensionally configured if desired for the underside of the mat.

The lower mould plate 112 has a set of surface recesses 118 corresponding to the shape and disposition of the desired fabric pieces 103, and these recesses 118 are substantially deeper than the fabric pieces. In each recess a pressure plate 117, of substantially corresponding shape, is operable. The pressure plate 117 is supported on legs 116 which extend slidably through holes in an intermediate support plate 113, and are connected rigidly to a rear lower plate 102 to which in use moulding pressure and heating are applied. The spacing 114 (and correspondingly the length of the legs 116) is exaggerated in the drawing for clarity; in practice it approximates to the vacant height above the pressure plate and textile piece 103 in the recess 118. Biasing springs 117 (shown schematically) urge the moulding plates 113,102 apart, so that the pressure plates 117 normally lie in a retracted position, at the bottom of their recesses 118. It will be seen that the carpet pieces lie safely well down in the recesses until the mould is pressurised (arrows F) whereupon the clearance between the plates 113,102 is taken up with lost motion and the carpet pieces advance with pressure to confront the uncured rubber layer at the same level as the rest of the plate face 115. Because of the small cross-section of the legs 116 it is found unnecessary in many cases to take further precautions against excess heat transfer to the fabric pieces. If wished the pressure plates 117 can be made from heat-shielding material, for which the options are as discussed above for the heat-shield elements used in other embodiments.

## Claims

1. A method of making a rubber layer product, such as a mat, having a rubber top surface interspersed with an array of fabric pieces, comprising
forming a rubber mat base module, with recesses at intended positions for the fabric pieces;
joining fabric pieces onto respective rubber pieces to make fabric-covered rubber pieces whose shapes complement the recesses of the rubber base module, and
fixing the fabric-covered rubber pieces into the recesses of the rubber base module.

2. A method according to claim 1 in which the recesses extend right through the rubber base module.

3. A method according to claim 1 or 2 in which the outline of each fabric piece matches the outline of the front surface of the rubber piece onto which it is joined.

4. A method according to any one of claims 1 to 3 in which edge surfaces of the recesses converge towards a front opening, where the fabric piece is exposed in the finished product.

5. A method according to any one of the preceding claims in which the fabric pieces are tufted.

## Patentansprüche

1. Verfahren zur Herstellung eines Gummischichtprodukts, wie z.B, einer Matte, mit einer Oberseite aus Gummi, die mit einer Anordnung von Stoffstücken durchsetzt ist, umfassend
die Bildung eines Gummimatten-Basismoduls mit Vertiefungen an den für die Stoffstücke vorgesehenen Positionen;
das Zusammenfügen von Stoffstücken auf jeweilige Gummistücke zur Herstellung von stoffbedeckten Gummistücken, deren Formen die Vertiefungen des Gummibasismoduls ergänzen, und
die Befestigung der stoffbedeckten Gummistücke in den Vertiefungen des Gummibasismoduls.

2. Verfahren nach Anspruch 1, worin sich die Vertiefungen durch das Gummibasismodul hindurch erstrecken.

3. Verfahren nach Anspruch 1 oder 2, worin der Umriss jedes Stoffstücks dem Umriss der Vorderfläche des Gummistücks entspricht, auf das es zusammengefügt wird.

4. Verfahren nach einem der Ansprüche 1 bis 3, worin Randflächen der Vertiefungen zu einer vorderen Öffnung hin zusammenlaufen, wo das Stoffstück in dem fertigen Produkt freiliegt.

5. Verfahren nach einem der vorangegangenen Ansprüche, worin die Stoffstücke getuftet sind.

## Revendications

1. Procédé de fabrication d'un produit de couche de caoutchouc, tel qu'un mat, ayant une surface supérieure de caoutchouc intercalée avec un ensemble de morceaux de tissu, comprenant
la formation d'un module de base de mat de caoutchouc, avec des évidements à des positions prévues pour les morceaux de tissu ;
la jonction des morceaux de tissu à des morceaux de caoutchouc respectifs pour fabriquer des morceaux de caoutchouc recouverts de tissu dont les formes complètent les évidements du module de base de caoutchouc, et
la fixation des morceaux de caoutchouc recouverts de tissu dans les évidements du module de base de caoutchouc.

2. Procédé selon la revendication 1, dans lequel les évidements s'étendent directement à travers le module de base de caoutchouc.

3. Procédé selon la revendication 1 ou 2, dans lequel le contour de chaque morceau de tissu correspond au contour de la surface avant du morceau de caoutchouc auquel il est joint.

4. Procédé selon l'une quelconque des revendications 1 à 3, dans lequel les surfaces de bord des évidements convergent vers une ouverture avant, où le morceau de tissu est exposé dans le produit fini.

5. Procédé selon l'une quelconque des revendications précédentes, dans lequel les morceaux de tissu sont touffetés.
